Europäisches Patentamt

(19) European Patent Office

Office européen des brevets

(11) Publication number: **0 314 637 B1**

(12) # EUROPEAN PATENT SPECIFICATION

(45) Date of publication of patent specification :
17.07.91 Bulletin 91/29

(51) Int. Cl.⁵ : **B60R 16/08, B62D 5/07**

(21) Application number : 88830434.2

(22) Date of filing : 25.10.88

(54) **A hydraulic operating system for tractors.**

(30) Priority : 26.10.87 IT 5375287 U

(43) Date of publication of application :
03.05.89 Bulletin 89/18

(45) Publication of the grant of the patent :
17.07.91 Bulletin 91/29

(84) Designated Contracting States :
AT CH DE ES FR GB LI

(56) References cited :
DE-A- 3 138 307
DE-A- 3 237 019
DE-A- 3 334 253
DE-A- 3 433 896

(73) Proprietor : SAME S.p.A.
Viale F. Cassani, 14
I-24047 Treviglio Bergamo (IT)

(72) Inventor : Bisleri, Secondo
c/o SAME S.p.A Viale F. Cassani, 14
I-24047 Treviglio Bergamo (IT)

(74) Representative : Buzzi, Franco et al
c/o Jacobacci-Casetta & Perani S.p.A. Via
Alfieri, 17
I-10121 Torino (IT)

EP 0 314 637 B1

Jouve, 18, rue Saint-Denis, 75001 PARIS

## Description

The present invention provides a new hydraulic operating system for tractors of the type including a gearbox with a lubricating circuit, a hydraulic steering system, a power take – off, a hydraulically-operated controlled lifting system, and auxiliary hydraulic devices.

The hydraulic system according to the invention is characterised by the features of the characterizing part of claim 1.

The hydraulic system according to the invention has the following advantages over conventional hydraulic systems with a single circuit currently installed in tractors :
- less power absorbed by the engine,
- less power dissipated,
- longer life/better reliability of the components (due to the possibility of better filtration of the hydraulic fluid resulting from the division of the circuit into two separate parts),
- greater flexibility in use, the lifting system and the auxiliary hydraulic devices being operable simultaneously at two power levels,
- low gearbox oil level.

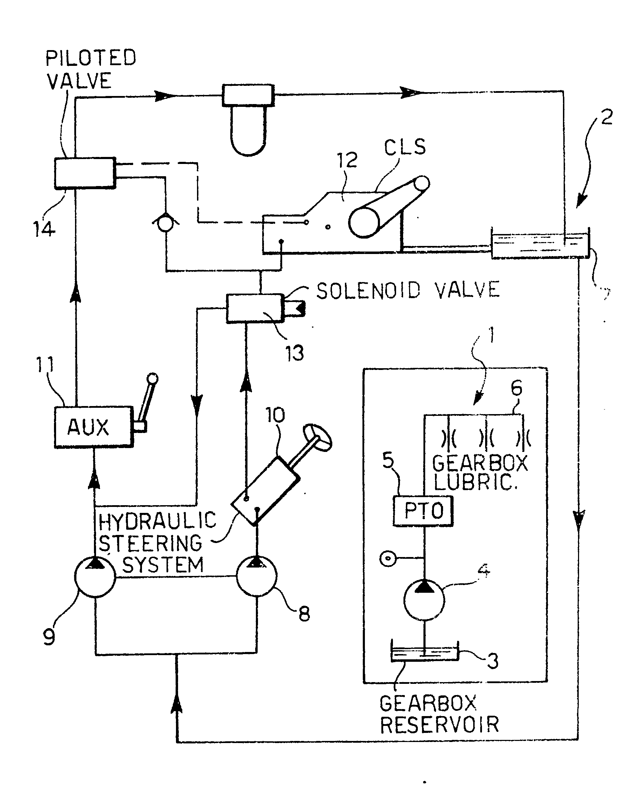

The invention will now be described in detail with reference to the appended drawing which shows diagrammatically a hydraulic operating system for tractors according to the invention.

With reference to the drawing, the hydraulic operating system according to the invention includes two separate and distinct hydraulic circuits, indicated 1 and 2 respectively.

The first circuit 1 includes an oil reservoir 3 (the casing of the tractor gearbox) and a hydraulic pump 4 which operates the power take-off 5 of the tractor, supplies the lubricating circuit 6 of the tractor gearbox, and operates any other locking and clutch devices.

The second hydraulic circuit 2 includes a reservoir 7 and a pair of hydraulic pumps 8, 9 disposed in parallel, of which the first supplies the hydraulic steering system 10 and the controlled lifting system 12 of the tractor and the second supplies the distributors of the auxiliary hydraulic devices 11.

The circuit 2 further includes a solenoid valve 13 for connecting the output of the hydraulic steering system 10 selectively to the input of the auxiliary distributors 11, and a piloted valve 14 which enables the output of the auxiliary distributors 11 to be connected selectively to the lifting system 12. In practice, the solenoid valve 13 and the piloted valve 14 enable the selective boosting of the supply from the pump 8 and the pump 9 respectively to the auxiliary distributors 11 or to the lifting system 12.

The adoption of the two separate circuits 1 and 2 enables the power absorbed by the engine of the tractor and the power dissipated, as well as the level of the oil in the tractor gearbox, to be reduced and at the same time ensures that the various hydraulic components have a longer working life by virtue of the possibility of more effective filtration of the hydraulic fluid which is divided between the two separate circuits.

The conformation of the circuit 2, particularly the adoption of the two pumps 8 and 9, the solenoid valve 13 and the piloted valve 14, ensures that the auxiliary devices 11 and the lifting system 12 operate simultaneously, as well as providing greater flexibility in use by virtue of the possibility of operation at selectively different power levels.

## Claims

1. A hydraulic operating system for tractors including a gearbox with a lubricating circuit, a hydraulic steering system, a power take-off, a hydraulically-operated controlled lifting system, and auxiliary hydraulic devices, characterised in that it includes two separate hydraulic circuits (1, 2) with respective separate reservoirs (3, 7), of which the first circuit (1) includes a pump (4) for supplying the lubricating circuit of the gearbox (6) and the power take-off (5) and the second circuit (2) includes two pumps (8, 9) in parallel, of which the first (8) simultaneously supplies the hydraulic steering system (10) and the lifting system (12) and the second (9) supplies the auxiliary hydraulic devices (11) ; the second circuit (2) further including means (13, 14) for selectively boosting the supply to the auxiliary hydraulic devices (11) or the lifting system (12) from the first pump (8) and the second pump (9) respectively.

## Ansprüche

1. Hydraulisches Arbeitssystem für Traktoren, wobei das System ein Getriebe mit einem Schmierkreislauf, ein hydraulisches Lenksystem, eine Antriebswelle, ein hydraulisch getriebenes, gesteuertes Hebesystem sowie hydraulische Hilfseinrichtungen aufweist, dadurch gekennzeichnet, daß das System zwei getrennte Hydraulikkreisläufe (1, 2) mit getrennten Behältern (3, 7) aufweist, von denen der erste Kreislauf (1) eine Pumpe (4) aufweist, um den Schmierkreislauf des Getriebes (6) sowie die Antriebswelle (5) anzuspeisen, und der zweite Kreislauf (2) zwei Pumpen (8, 9) aufweist, die parallel liegen, wobei die erste Pumpe (8) gleichzeitig das hydraulische Lenksystem (10) sowie das Hebesystem (12) und die zweite Pumpe (9) die hydraulischen Hilfseinrichtungen (11) anspeist ; wobei der zweite Kreislauf (2) weiters eine Einrichtung (13, 14) aufweist, um die Anspeisung zu den hydraulischen Hilfseinrichtungen (11) oder zum Hebesystem (12) von der ersten Pumpe (8) bzw. der zweiten Pumpe (9) wahlweise zu verstärken.

## Revendications

1. Système d'actionnement hydraulique pour tracteurs, comprenant une boite de vitesses avec un circuit de graissage, un dispositif de direction hydraulique, une prise de force, un dispositif de relevage hydraulique commandé, et des dispositifs hydrauliques auxiliaires, caractérisé en ce qu'il comprend deux circuits hydrauliques séparés (1, 2) avec des réservoirs respectifs séparés (3, 7), le premier circuit (1) comprenant une pompe (4) pour alimenter le circuit de graissage de la boite de vitesses (6) et la prise de force (5), et le second circuit (2) comprenant deux pompes (8, 9) en parallèle dont la première pompe (8) alimente simultanément le dispositif de direction hydraulique (10) et le dispositif de relevage (12), et dont la seconde pompe (9) alimente les dispositifs hydrauliques auxiliaires (11) ; le second circuit (2) comprenant en outre des moyens (13, 14) pour renforcer sélectivement l'alimentation des dispositifs hydrauliques auxiliaires (11) ou le dispositif de relevage (12) en provenance de la première pompe (8) et de la seconde pompe (9), respectivement.

PILOTED VALVE

CLS

2

14

12

SOLENOID VALVE

13

11

1

6

GEARBOX LUBRIC.

5

PTO

AUX

10

4

HYDRAULIC STEERING SYSTEM

9

8

3

GEARBOX RESERVOIR